# EUROPEAN PATENT APPLICATION

(11) **EP 4 574 477 A1**
(43) Date of publication of application: **25.06.2025**
(21) Application number: 23218959.7
(22) Date of filing: 21.12.2023
(51) Int. Cl.: B60H 1/00, F25B 1/00, F28D 1/04, F28D 7/00, F28F 27/02

(54) **A HEAT EXCHANGER**

(71) Applicant: VALEO SYSTEMES THERMIQUES, 78320 Le Mesnil Saint-Denis (FR)
(72) Inventor: BELZOWSKI, Michal, 32 050 Skawina (PL); STRAMECKI, Tomasz, 32 050 Skawina (PL); JURKIEWICZ, Damian, 32 050 Skawina (PL)
(74) Representative: Valeo Systèmes Thermiques

(57) **Abstract**

The invention concerns, inter alia a heat exchanger (100) for a motor vehicle comprising a single tubes (200), the tubes (200) comprising: a first manifold (102); a second manifold (104) configured spaced apart from the first manifold (102); and a plurality of tubes (150) fluidically connected between the first manifold (102) and the second manifold (104), wherein the tubes (150) are configured to enable circulation of a first fluid (HP) and a second fluid (LP) between the first manifold (102) and the second manifold (104), wherein in that the plurality of tubes (150) comprises a first section (160), a second section (170) and a third section (180), wherein said sections (160, 170, 180) are stacked one above the other, wherein the plurality of tubes (150) is at least partially encapsulated in a housing (300) to enable circulation of at least a third fluid (COOL) around them, wherein all the tubes (150) forming the sections (160, 170, 180) are made in process of extrusion.

## Description

### FIELD OF INVENTION

The present invention relates to a heat exchanger. More specifically, the present invention relates to an integrated multifunctional heat exchanger for a motor vehicle that is able to withstand high fluid pressures.

### BACKGROUND OF THE INVENTION

A vehicle is provided with several heat exchangers for example, an internal heat exchanger, an evaporator, a condenser, a water condenser (WCDS), etc. The evaporator and the condenser are part of an air-conditioning (AC) loop or a part of HVAC system. These heat exchangers are used for heat exchange/transfer between two or more fluids/media. IHX is used to transfer heat between the low side pressure and the high-pressure flow circuits. Its function is to improve system performance by further sub-cooling the refrigerant being supplied to the evaporator through the refrigerant control device.

A conventional heat exchanger typically includes a pair of manifolds, including a first manifold and a second manifold, configured at two opposite sides of the heat exchanger, and a heat exchanger tubes arranged between the pair of manifolds. The heat exchanger tubes is formed of a plurality of flat tubes (hereinafter, also referred to as tubes for simplicity) and fins arranged between outer surfaces of the adjacent tubes. Each tube has two opposite open ends that are inserted into respective tube insertion slots of a first header and a second header of the respective first manifold and the second manifold. Each of the first header and the second header in conjunction with a corresponding first tank and second tank define the first manifold and the second manifold for receiving and distributing the fluid/coolant to the tubes. One or more of the fluid/coolants flow between the first manifold to the second manifold through the plurality of tubes and the other fluid/air flows around and in a space between the tubes to enable heat exchange between the fluids.

It has been observed that when the one or more fluid/coolants, which flow between the manifolds and in the tubes, are a high-pressure fluid, like R744 (CO2) or R290 (propane), the heat exchanger has to be adapted accordingly. In particular, the high-pressure fluid imposes additional design constrains on the heat exchanger as the high pressure of the fluid necessitates higher mechanical resistance of heat exchanger components. Further, at the same time, efficiency requirements pose further demands on the heat exchanger. In addition, the existing heat exchangers are not capable to operate efficiently for the fluid/coolant operate at the high pressure, which can be up to 260 bar on the low-pressure side and up to 360 bar on the high-pressure side.

The prior art heat exchangers do not emphasize combining several types of the heat exchangers into single unit. Even if some concept is proposed, it still does not provide smart design in terms of packaging. For instance, each outlet and inlet for each of the fluid(s) requires separate block or spigot what significantly increases packaging.

The ongoing electrification of the automotive market launched the pursuit for optimized designs while at the same time there is a never-ending desire for powerful and efficient AC/HP loop in the vehicle.

Thus, there is a need to provide a compact heat exchanger that will encompass functions of several heat exchanger types without decreasing the performance of any of them.

In the field of internal heat exchangers, there remains a need to decrease the number of components required for creation of hydraulic connection between components.

There is also a need to reduce the required assembly time of the heat exchanger(s) while keeping the assembly means uncomplicated.

There is also a need to increase the fluid-tightness of the heat exchangers operating under highly pressurized refrigerant fluid.

There is also a need to improve thermal insulation between the heat exchangers. In particular, there is a need to thermally insulate the hot part of the internal heat exchanger from the cooler part of the chiller.

Finally, there is a need to provide inexpensive assembly which will mitigate the abovementioned prior art problems.

### SUMMARY OF THE INVENTION

The invention concerns, inter alia, a heat exchanger for a motor vehicle comprising a single tubes, the tubes comprising: a first manifold ; a second manifold configured spaced apart from the first manifold ; and a plurality of tubes fluidically connected between the first manifold and the second manifold, wherein the tubes are configured to enable circulation of a first fluid (HP) and a second fluid (LP) between the first manifold and the second manifold, wherein the plurality of tubes comprises a first section, a second section and a third section, wherein said sections are stacked one above the other, wherein the plurality of tubes is at least partially encapsulated in a housing to enable circulation of at least a third fluid (COOL) around them, wherein all the tubes forming the sections are made in process of extrusion.

In the figures, the schematic flow of the first fluid (HP) is indicated by the solid arrows, the schematic flow of the second fluid (LP) is indicated by the dashed arrows, whereas the schematic flow of the third fluid (COOL) is indicated by the dotted arrows.

Advantageously, the first section forms a water gas cooler section, the second section forms an internal heat exchanger section, and the third section forms a chiller section, wherein the internal heat exchanger section is sandwiched between the water gas cooler section and the chiller section.

Advantageously, the tubes may comprise tubes of a first type and at least one tube of a second type.

Advantageously, tubes of each first type and the second type comprises an intermediate flat tube section, two opposite tube end sections, and two tube bent sections located between the intermediate flat tube section and the two respective opposite tube end sections.

Advantageously, the total length of the tube end sections of the tubes of the first type are shorter than the total length of the tube end sections of the tubes of the second type, wherein the length is measured in parallel with respect to the axis of elongation of the tubes.

Advantageously, the first section and the third section comprise plurality of tubes of the first type, whereas the second section comprises tubes of the second type.

Advantageously, the first section and the third section comprise plurality of tubes of the first type, whereas the second section comprises tubes of the first type and the second type.

Advantageously, the first section comprises more tubes than the second section or the third section.

Advantageously, the second section comprises more tubes than the first section or the third section.

Advantageously, the tubes of each section are arranged in pairs, wherein each pair comprises a primary tube and a secondary tube being juxtaposed with respect to respective primary tube so that the end portions of each primary tube is in contact with the end portion of respective secondary tube.

Advantageously, at least part of the tubes forming the second section is arranged so that the flat section of the secondary tube of one pair is in contact with the flat section of the primary tube of the neighboring pair.

Advantageously, the tubes of the first type are interlaced with turbulators, whereas tubes of the second type are interlaced with fins.

Advantageously, at least one of the tubes of the second type is in contact with the turbulator.

Advantageously, the second manifold is fluidly connected to expansion device.

Advantageously, the heat exchanger comprises an insulating section, wherein said insulating section comprises the secondary tube of the terminal pair of the second section, said secondary tube neighboring directly with the third section, and the primary tube of the third section, wherein the second fluid (LP) circulates in both secondary tube and the primary tube.

### BRIEF DESCRIPTION OF DRAWINGS

Other characteristics, details and advantages of the invention may be inferred from the description of the invention hereunder. A more complete appreciation of the invention and many of the attendant advantages thereof will be readily obtained as the same becomes better understood by reference to the following detailed description when considered in connection with the accompanying figures, wherein:

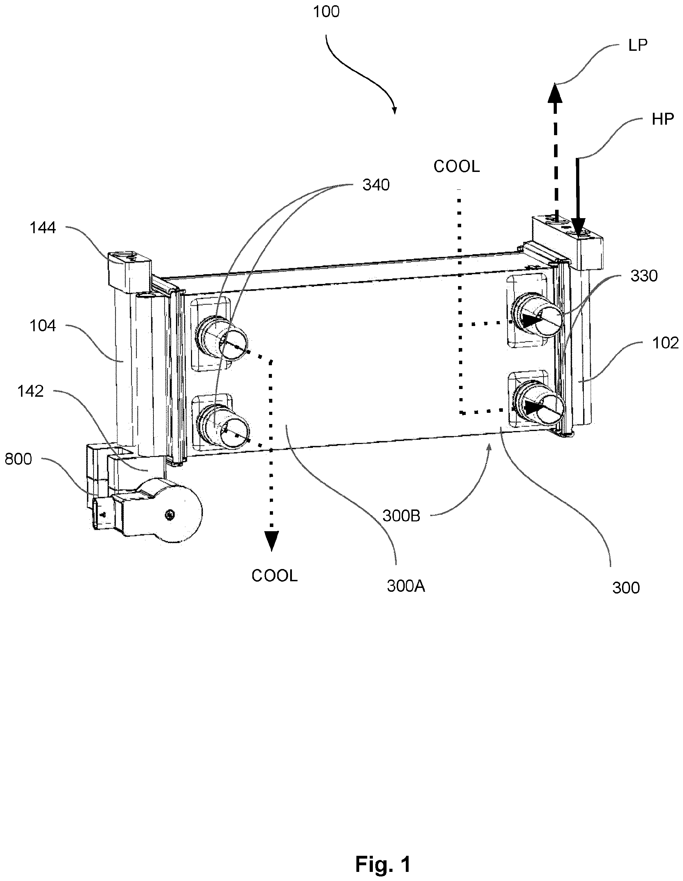

Fig. 1 shows a perspective view of the assembly of the heat exchanger and the expansion device.

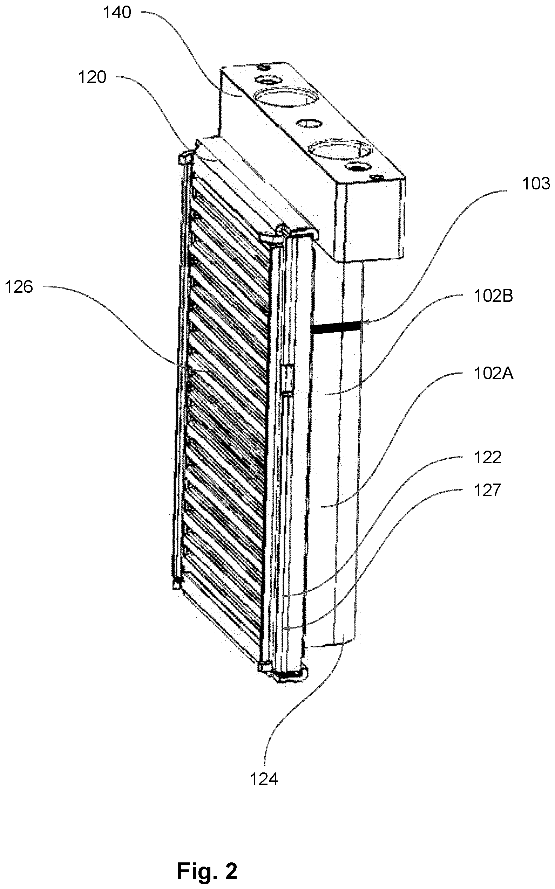

Fig. 2 shows a perspective view of the first manifold.

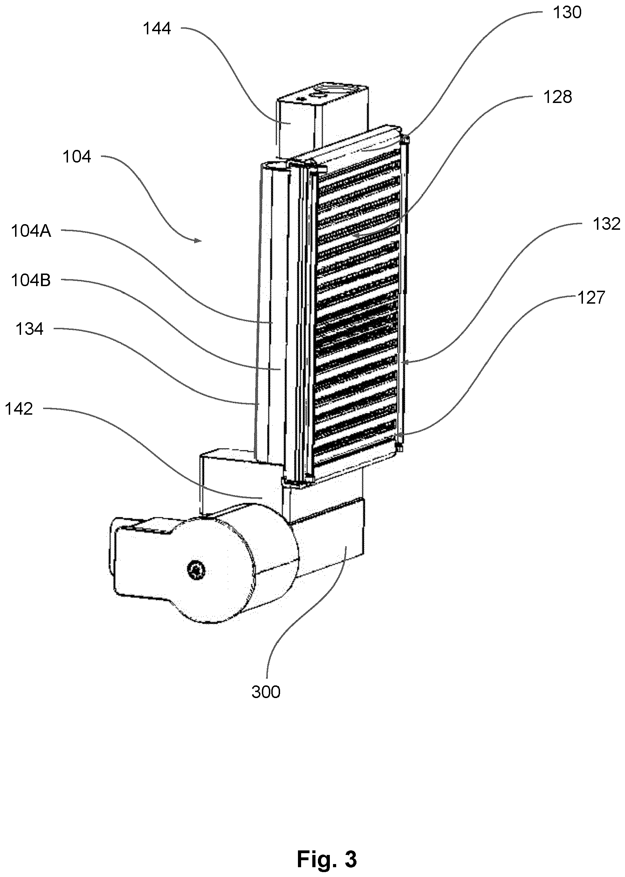

Fig. 3 shows a perspective view of the assembly comprising a second manifold of the heat exchanger and the expansion device.

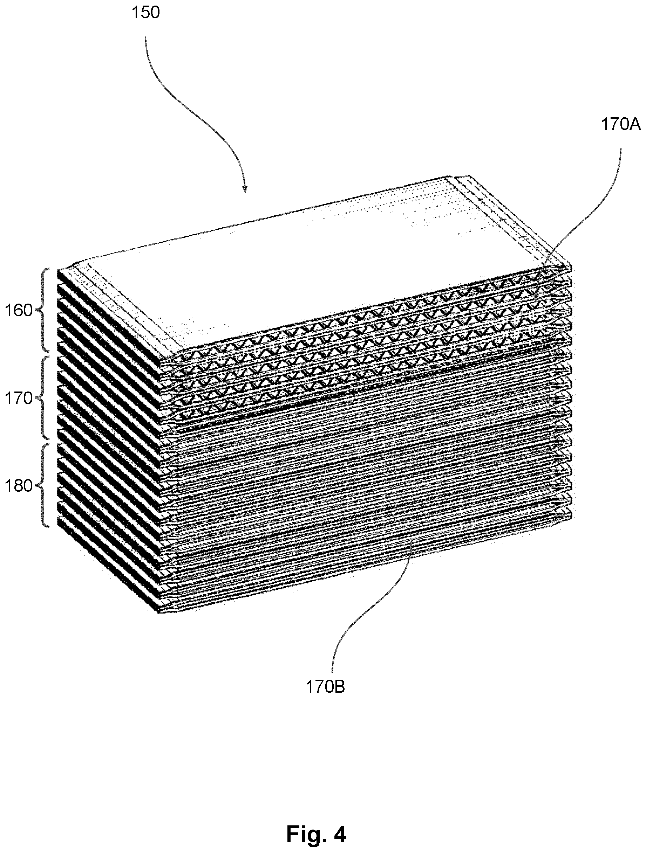

Fig. 4 shows a perspective view of the plurality of tubes.

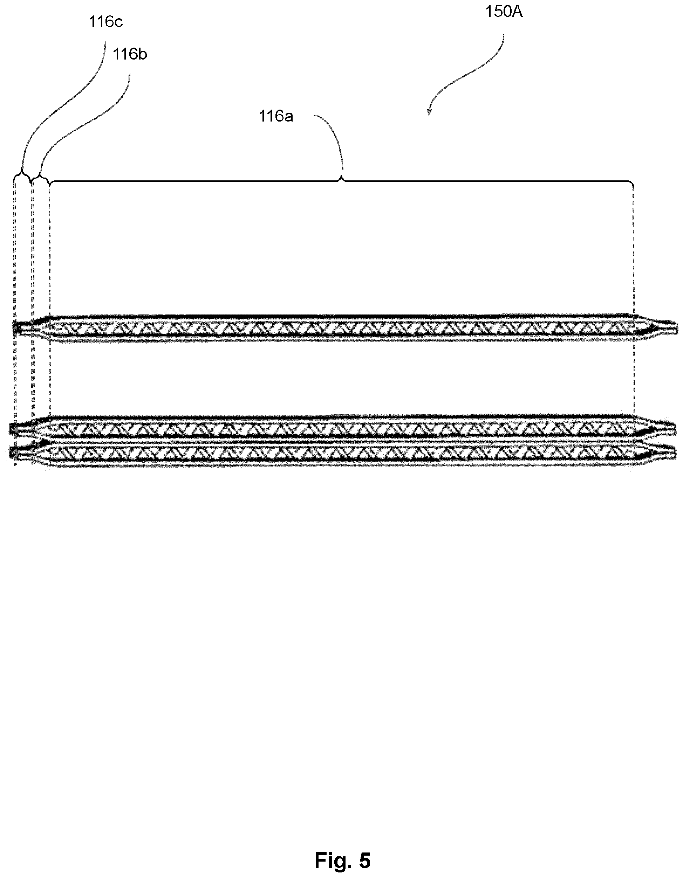

Fig. 5 shows the tubes of the first type with the division to the sections.

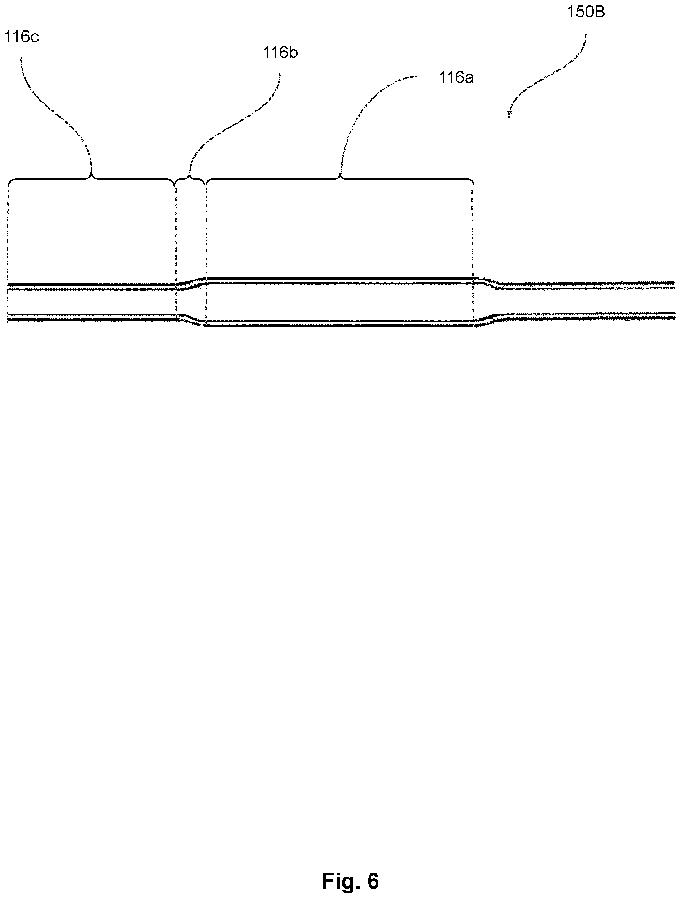

Fig. 6 shows the tubes of the second type with the division to the sections.
Fig. 7 shows an exemplary schematics of one of the possible flow patterns of the first fluid and the second fluid.

### DETAILED DESCRIPTION OF EMBODIMENTS

The subject-matter of the present invention is, among others, a heat exchanger for a motor vehicle. More specifically, the present invention discloses a simple, light, and cost efficient heat exchanger that is able to withstand high fluid pressures, which can be up to 260 bar on the low-pressure side (LP) and up to 360 bar on the high-pressure side (HP), for high-pressure systems. In addition, the heat exchanger is adapted to exchange heat between refrigerants from low pressure side and high pressure side of a cooling loop to increase efficiency of the cooling loop of the air conditioning system and/or cooling system.

A heat exchanger 100 being the subject-matter of the invention may comprise a first manifold 102, a second manifold 104 configured spaced apart on two opposite sides of a plurality of tubes 150. For the sake of simplicity, the plurality of tubes may also be simply referred to as "tubes". The tubes 150 may be configured to fluidically connect the first manifold 102 and the second manifold 104. In particular, the tubes 150 may be configured to enable circulation of a first fluid (HP) and a second fluid (LP) between the first manifold 102 and the second manifold 104. For instance, the first fluid and/or the second fluid can be a natural refrigerant such as, but not limited to, R744 (CO2) or R290 (propane).

It is to be noted that the terms "first fluid" and "second fluid" may refer not only to two completely different fluids having, for example, different chemical composition, but also to substantially the same fluid having different properties. For instance, the first fluid (HP) may be high-pressure refrigerant (HP) and the second fluid (LP) may be the low-pressure refrigerant (LP). The third fluid (COOL) may be, for example, a coolant (COOL). For the sake of clarity and easy understanding of the drawings the (HP), (LP) and (COOL) abbreviations may be used throughout the descriptions instead of reference numbers.

The plurality of tubes 150 may comprise a first section 160, a second section 170 and a third section 180, wherein said sections 160, 170, 180 are stacked one above the other. The term stacked means that the tubes 150 of each section 160 170 180 are arranged one above the other so that general planes of all tubes 150 are parallel with respect to each other without being coplanar at the same time.

The plurality of tubes 150 may be extruded tubes with micro ports, i.e., the plurality of tubes 150 may include micro channels extending along lengths of the tubes. The microchannels comprised in the tubes 150 forming each section 160, 170, 180 may all comprise identical micro channels. Alternatively, the microchanels comprised in the tubes 150 forming each section 160, 170, 180 may comprise different micro channels, for example of different diameters.

The heat exchanger 100 comprising the first section 160, a second section 170 and a third section 180, wherein said sections 160, 170, 180 are stacked one above the other, wherein the plurality of tubes 150 is at least partially encapsulated in a housing 300 to enable circulation of at least a third fluid (COOL) around at least the first section 160 and the third section 180 allows significant reduction of packaging. In other words, instead of using three heat exchangers, each having its own connection blocs and associated loop conduits, there is a single unit encompassing multiple functions. As all the tubes 150 forming the sections 160, 170, 180 are made in process of extrusion, the heat exchanger 100 is configured for refrigerant operating at high pressure such as R744 or R290.

In particular, the first section 160 may form a water gas cooler section (WGC), the second section 170 may form an internal heat exchanger section (IHX), and the third section 180 may form a chiller section. Although the functions of each type of heat exchangers (WGC, IHX and chiller) are well known in the art, wherein the internal heat exchanger section is sandwiched between the water gas cooler section and the chiller section.

Naturally, the term of juxtaposed tubes suggests that the tubes 150 are not just a straight tubes, i.e. tubes where the walls are always parallel to the same plane. In the claimed heat exchanger 100, the tubes may comprise curves and bends which allows to divide each tubes of the plurality of tubes 150 into so-called sections.

For this reason, each tube of the plurality of tubes 150 may comprise an intermediate flat tube section 116a, two opposite tube end sections 116c, and two tube bent sections 116b located between the intermediate flat tube section 116a and the two respective opposite tube end sections 116c.

The intermediate flat tubes section 116a may include two flat walls arranged in parallel with respect to each other and two side walls connecting said flat walls to make the closed profile of the tube. Naturally, as the tubes are made in process of extrusion, the flat walls and side walls shall be regarded as portions making the outline of the tube in its cross-sectional view, wherein the cross section cut is made in perpendicular to direction in which the tube extends.

Each bent section 116b may comprise a first slope facing away and at an angle with respect to the general plane of the tube, and a second slope which is bending the portion of the tube in a direction substantially parallel with respect to the general plane of the tube. This allows the tube end section 116c to be parallel with respect to the flat tube section 116a.

The flat tube section 116a may be arranged in-between the tube bent sections 116b and tube end sections 116c.

Accordingly, the tubes 150 may comprise tubes of a first type 150A and at least one tube of a second type 150B. The tubes 150 of each first type 150A and the second type 150B may comprise an intermediate flat tube section 116a, two opposite tube end sections 116c, and two tube bent sections 116b located between the intermediate flat tube section 116a and the two respective opposite tube end sections 116c.

Accordingly, tubes 150 of each section 160, 170, 180 may be arranged in pairs 161, 171, 181. Each pair 161, 171, 181 may comprise a primary tube 161a, 171a, 181a and a secondary tube 161b, 171b, 181b being juxtaposed with respect to respective primary tube 161a, 171a, 181a, so that the end portions 116c of each primary tube 161a, 171a, 181a is in contact with the end portion 116c of respective secondary tube 161b, 171b, 181b.

In one of the embodiments, at least one tube bent section 116b and tube end section 116c are located at the terminal ends of the tubes 150. In other words, the flat tube section 116a is comparatively longer compared to any of the end sections 116c. It means that the end sections 116c are as short as possible, i.e. long enough to allow insertion of the tubes 150 into respective slots, but no longer. The length of each section 116a, 116b, 116c may be measured parallelly with respect to the axis of elongation of the tube. In view of this, the total length of both end sections 116c of any of the of tubes 150 may be five to ten percent of the total length of said tube 150, wherein the length is measured parallelly to the axis of elongation of said tube 150.

In one embodiment, the tubes 150 forming the second section 170 may arranged so that the flat section 116a of the secondary tube 171b of one pair 171 is in contact with the flat section 116a of the primary tube 181a of the neighboring pair 181 of the third section 180. This allows forming an insulating section 190, wherein said insulating section 190 is configured to decrease the temperature gradient between the hot first fluid (HP) flowing in, for example, the second section 170 and the second fluid (LP) flowing in the third section 180. The insulating section 190 comprises the secondary tube 171b of the terminal pair 171 of the second section, neighboring with the third section 180, and the primary tube 181a of the third section 180.

The insulating section may also be located at the frontier of the first section 160 and the second section 170. The tubes 150 forming the first section 160 may arranged so that the flat section 116a of the secondary tube 161b of one pair 161 is in contact with the flat section 116a of the primary tube 171a of the neighboring pair 171 of the second section 170. This allows forming a secondary insulating section 191, wherein said secondary insulating section 191 is configured to decrease the temperature flowing in the primary tube 171a of the neighboring pair 171 of the second section 170 by means of the third fluid (COOL) circulating around and at the frontier of the first section 160.

The total length of the tube end sections 116c of the tubes of the first type 150A may be shorter than the total length of the tube end sections 116c of the tubes of the second type 150B, wherein the length is measured in parallel with respect to the axis of elongation of the tubes 150.

The end sections 116c of the tubes of the second type 150B may be of increased length, as mentioned in previous paragraph. This allows to control the efficiency of the thermal exchange, especially in the second section 170, i.e. IHX section. In particular, this allows to impede the efficiency when required. The total length of both end sections 116c of any of the of tubes 150 may be more than ten percent of the total length of said tube 150, wherein the length is measured parallelly to the axis of elongation of said tube 150. If even more efficiency reduction is required, the total length of both end sections 116c of any of the of tubes 150 may be between ten and thirty three percent of the total length of said tube 150, wherein the length is measured parallelly to the axis of elongation of said tube 150.

In another embodiment, the second section 170 may comprise both tubes of the first type 150A and the tubes of the second type 150B. For example, the tubes of the second type 150B may be sandwiched between the tubes of the first type 150A while both types of tubes 150A, 150B configuring the second section 150B. Thus, the tubes 150 the heat exchanger 100 may be so arranged, that the first section 160 and the third section 180 comprise plurality of tubes of the first type 150A, whereas the second section 170 comprises tubes of the first type 150A and the second type 150B.

Opposite tube end sections 116c of the two tubes 150 of each sections 160, 170, 180 are configured to be received in the corresponding single tube slot 126, 128 of the manifolds 102 and 104. Further, this arrangement of the tubes end sections 116c of the two tubes 150 in single slot 126, 128 of the respective manifold 102,104 help to mechanically strengthen the proposed heat exchanger by reducing the number of required slots 126, 128 in the manifolds 102 and 104 and increases a gap between two adjacent slots 126, 128 of the manifold 102, 104 in comparison to number of slots required and a gap between two adjacent slots in the conventional heat exchanger with same number of flat tubes.

As already mentioned, the sections 160, 170, 180 may be arranged one above another. Hence, at least one of the tubes 150 along with this intermediate flat tube sections 116a of one section, for example the first section 160, and at least one of the tubes 150 along with this intermediate flat tube sections 116a of the other section, for example the second section 170 may abut with each other. This contact between the intermediate flat tube sections 116a of the neighboring sections 160 and 170 (or, analogically- 180) allows heat exchange between the fluids, such as the first fluid (HP) and/or the second fluid (LP).

In an embodiment, the first fluid (HP) and the second fluid (LP) can be same refrigerant fluid.

In another embodiment, the first fluid (HP) and the second fluid (LP) can be different refrigerant fluids.

The first manifold 102 may comprise a first header plate 120, a first cover 124. The first header plate 120 is configured to receive the tubes 150 and to be attached to the first cover 124. Further, the first manifold 102 may comprise one or more first internal plates 122 arranged between the first header plate 120 and the first cover 124. The internal plates 122 may be regarded as spacers with openings which allow the first fluid (HP) and or second fluid (LP) circulation in the heat exchanger 100. The first header plate 120 can include a plurality slots 126, and the first inner plates 122 can also include a plurality of slots 127 corresponding to the slots 126 of the first header plate 120.

Similarly, the second manifold 104 may comprise a second header plate 130, and a second cover 134. The second header plate 130 is configured to receive the tubes 150 and to be attached to the second cover 134. Further, the second manifold 104 may comprise one or more second internal plates 132 configured between the second header plate 130 and the second cover 134. The internal plates 132 may be regarded as spacers with openings which allow the first fluid (HP) and or second fluid (LP) circulation in the heat exchanger 100.

The second header plate 130 may comprise a plurality slots 128, and the second inner plates 132 can also include a plurality of slots 127 corresponding to the slots 126 of the second header plate 130.

In one embodiment, each section 160, 170, 180 may comprise equal number of tubes 150.

Alternatively, one of the sections, for example, the first section 160 may comprise different number of tubes 150 than the second section 170 and the third section 180. This allows to provide sufficient or increased performance of the WGC section, i.e. the first section 160. Similarly, the second section 170 may comprise more tubes 150 than the first section 160 or the third section 180. This allows to increase the performance of the IHX section. Same principle may be applied to third section 180.

Alternatively, each tube section 160, 170, 180 may comprise different number of tubes 150. This allows obtaining tailored performance of each of the tube sections 160, 170, 180.

The conduit for the third fluid (COOL) which would allow the heat transfer between the third fluid (COOL) and at least second fluid (LP), the heat exchanger 100 may further comprise a housing 300. The housing 300 may be configured to at least partially encapsulate the tubes 150. It means that not all tubes of the plurality of tubes 150 must be contained in the coolant circuit. From the production point of view it is easier to encapsulate all the tubes, namely the tubes of all sections 160, 170, 180, yet in one of the embodiments only the second tubes 150 of the first section 160 and the third section 180 may be in contact with the third fluid (COOL) to exchange the heat therewith. In other words, the third fluid (COOL) rinses the outer faces of the tubes forming the first section 160 and/or the third section 180.

The housing 300 may comprise at least a first housing wall 300a and a second housing wall 300b. The walls 300a, 300b may be essentially a flat metallic plates. The walls 300a, 300b may extend in parallel with respect to each-other so that the tubes 150 are arranged in-between said walls 300a, 300b, so that an inner face of the first housing wall 300a and an inner face of the second housing wall 300b are facing said tubes 150. According to the needs and the size of the third fluid (COOL) circuit, the housing 300 may encapsulate different tube sections 160, 170, 180. For instance, at least the first section 160 and the third section 180 may be overlapped by the walls 300a, 300b. In one of the embodiments the second section 170 may be naked, i.e. the walls 300a, 300b may not overlap tubes 150 forming the second section 170. This allows to provide lighter heat exchanger, if needed. On the other hand, such configuration may cause the problems during the assembly, hence an embodiment wherein the housing walls 300a, 300b encapsulate all tubes 150 of all tube sections 160, 170, 180 is preferred.
The circuit for the third fluid (COOL) may be formed by fluid tight connection between the housing walls 300a, 300b, and two tubes of the plurality of tubes 150. It should be noted that the inner portions of the housing walls 300a, 300b may in contact with the shorter sides of the tubes 150.
The shorter sides of the tubes are two juxtaposed walls connecting two flat surfaces on both sides of the tubes 150. Naturally, the tubes 150, or rather, the flat surfaces thereof may be substantially perpendicular with respect to the housing walls 300a, 300b.

In order to provide the effective ingress and egress of the third fluid (COOL) in and out of heat exchanger 100, said heat exchanger 100 may further comprise at least one first spigot 330 for ingress of the third fluid (COOL) into the housing 300, and at least one second spigot 340 for egress of the third fluid (COOL) from the housing 300. Different shapes and sizes of the fist spigot 330 and the second spigot 340 are envisaged. For instance, at least one of the spigots 330, 340 may comprise substantially circular cross-section. In the preferred embodiment both spigots 330, 340 may comprise identical hydraulic diameter, yet an embodiment where the firs spigot 330 comprises a hydraulic diameter different from the second spigot 340 is also envisaged.

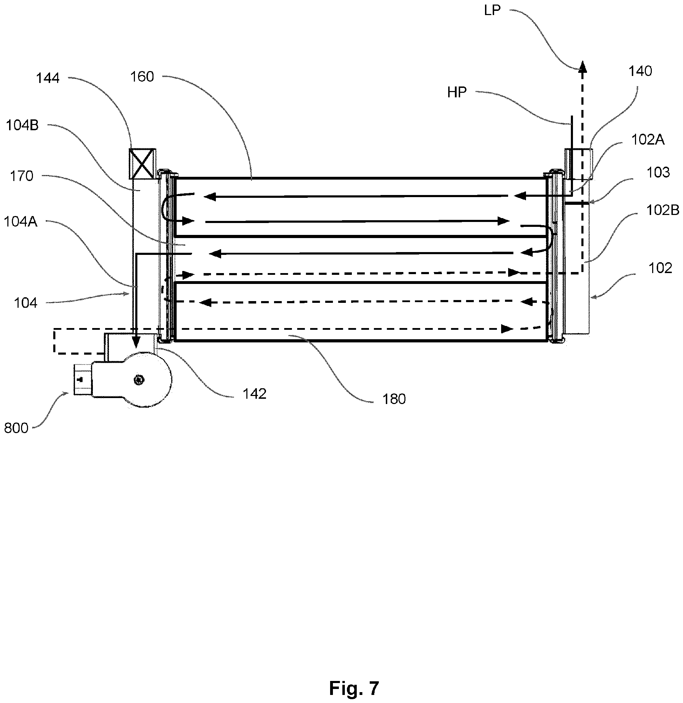

In a preferred embodiment, the heat exchanger 100 comprises two first spigots 330 and two second spigots 340, wherein each of the first spigot 330 are arranged at the first section 160 and the third section respectively, and the each of the second spigots 340 are also arranged at the first section 160 and the second section 180 respectively. This allows the circulation of the third fluid COOL only in the sections 160,180 which require that. The second section 170 does not require circulation of the third fluid COOL around its tubes because the second section is indeed am internal heat exchanger, therefore the circulation of the third fluid COOL around the second section 170 is optional.
In one embodiment, the housing 300 may comprise at least one return channel 333 configured to provide a U-flow for the third fluid (COOL). In order to provide a passage for the third fluid (COOL), the return channel 333 may be in a form of protrusion protruding outwardly with respect to the plurality of tubes 150, so that a gap is formed between the inner portions of the housing walls 300a, 300b and the shorter sides of the tubes 150. This way the conduit is formed which allows formation of the return channel. It should be noted that that the housing 300 may comprise only one return channel arranged at one of its walls 300a 300b, or it may comprise the return channels 333 at both of its walls 300a 300b.
The first manifold 102 may comprise a first channel 102A and a second channel 102B. The channels 102A, 102B may be fluidly connected to at least a first block 140. The first block 140 enables ingress of the first fluid (HP) into the heat exchanger 100, and egress of the second fluid (LP) form the heat exchanger 100.
The second manifold 104 may comprise a second block 142 which enables fluidal communication between the heat exchanger 100 and the expansion device 800. More precisely, the second block 142 allows the first fluid (HP) to flow into the expansion device 800. The expansion device 800 allows expansion of the first fluid (HP). The expansion of the first fluid (HP) is accompanied by decrease in fluid pressure. The fluid flowing out of the expansion device is this a low pressure, second fluid (LP). The second block 142 allows the second fluid (LP) to flow back into the heat exchanger 100. An embodiment, wherein not the second manifold 104, but the first manifold 102 comprises the second block 142 is also envisaged. However, one must take into the account that further modifications of both manifolds 102, 104 are required in order to provide correct flow pattern.
The second manifold 104 may further comprise a third block 144 which enables fluidal communication between the heat exchanger 100 and part of the refrigerant loop. The third block 144 may be regarded as optional, hence in Fig. 7 it is marked as non-functional by two crossing lines. In case the third block is operational, at least part of the first fluid (HP) flows from the second pass 170, and through the second manifold 104 towards the third block 144.
The first channel 102A is made in process of extrusion and it may comprise a first cross- section located in the vicinity of the first block 102 and the second cross-section arranged next to the first cross section. The first channel 102A may be divided into two conduits which are fluidly insulated from each-other by the means of the baffle 103 arranged at the bottom of the first cross-section of the channel 102A. In other words, the baffle 103 comprises a diameter which is larger than the second cross-section, yet not larger than the first cross-section so that the baffle 103 may be inserted into the first cross-section of the first channel 102A until it reaches its bottom, at the frontier of the first cross section and the second cross- section. The baffle 103 is fixed to the first manifold 102 during brazing process, thanks to the fact that the baffle 103 is cladded on one side, i.e. on the side facing the second cross- section of the first channel 102A.

The tubes may be interlaced with fins 170A. The fins 170A not only increase the heat exchange, but also provide a structural support between the neighboring first tubes 150. The fins 170A may extend along the neighboring intermediate flat tube sections 116a of corresponding pair pairs 161, 171, 181 of tubes 150.

The tubes 150 may be also interlaced with turbulators 170B, the turbulators 170B extend along the neighboring intermediate flat tube sections 116a especially in the first section 160 and the third section 180. The turbulators 170B may be regarded as the corrugations which are consecutively offset with respect to each other in a direction perpendicular to the axis of extension of the tubes 150.

In any case, the invention cannot and should not be limited to the embodiments specifically described in this document, as other embodiments might exist. The invention shall spread to any equivalent means and any technically operating combination of means.

## Claims

1. A heat exchanger (100) for a motor vehicle comprising:
a first manifold (102);
a second manifold (104) configured spaced apart from the first manifold (102); and
a plurality of tubes (150) fluidically connected between the first manifold (102) and the second manifold (104), wherein the tubes (150) are configured to enable circulation of a first fluid (HP) and a second fluid (LP) between the first manifold (102) and the second manifold (104),
wherein the plurality of tubes (150) comprises a first section (160), a second section (170) and a third section (180), wherein said sections (160, 170, 180) are stacked one above the other, wherein the plurality of tubes (150) is at least partially encapsulated in a housing (300) to enable circulation of at least a third fluid (COOL) around them,
wherein all the tubes (150) forming the sections (160, 170, 180) are made in process of extrusion.

2. The heat exchanger (100) according to claim 1, wherein first section (160) forms a water gas cooler section, the second section (170) forms an internal heat exchanger section, and the third section (180) forms a chiller section, wherein the internal heat exchanger section is sandwiched between the water gas cooler section and the chiller section.

3. The heat exchanger (100) according to any of the preceding claims, wherein the tubes (150) may comprise tubes of a first type (150A) and at least one tube of a second type (150B).

4. The heat exchanger according to claim 3, wherein tubes (150) of each first type (150A) and the second type (150B) comprises an intermediate flat tube section (116a), two opposite tube end sections (116c), and two tube bent sections (116b) located between the intermediate flat tube section (116a) and the two respective opposite tube end sections (116c).

5. The heat exchanger (100) according to claim 4, wherein the total length of the tube end sections (116c) of the tubes of the first type (150A) are shorter than the total length of the tube end sections (116c) of the tubes of the second type (150B), wherein the length is measured in parallel with respect to the axis of elongation of the tubes (150).

6. The heat exchanger (100) according to any of claims 3-5, wherein the first section (160) and the third section (180) comprise plurality of tubes of the first type (150A), whereas the second section (170) comprises tubes of the second type (150B).

7. The heat exchanger (100) according to any of claims 3-5, wherein the first section (160) and the third section (180) comprise plurality of tubes of the first type (150A), whereas the second section (170) comprises tubes of the first type (150A) and the second type (150B).

8. The heat exchanger (100) according to any of the preceding claims, wherein the first section (160) comprises more tubes (150) than the second section (170) or the third section (180).

9. The heat exchanger (100) according to any of the preceding claims, wherein the second section (170) comprises more tubes (150) than the first section (160) or the third section (180).

10. The heat exchanger (100) according to any of the preceding claims, wherein the tubes (150) of each section (160, 170, 180) are arranged in pairs (161, 171, 181), wherein each pair (161, 171, 181) comprises a primary tube (161a, 171a, 181a) and a secondary tube (161b, 171b, 181b) being juxtaposed with respect to respective primary tube (161a, 171a, 181a) so that the end portions (116c) of each primary tube (161a, 171a, 181a) is in contact with the end portion (116c) of respective secondary tube (161b, 171b, 181b).

11. The heat exchanger (100) according to claim 10, wherein at least part of the tubes (150) forming the second section (170) is arranged so that the flat section (116a) of the secondary tube (171b) of one pair (171) is in contact with the flat section (116a) of the primary tube (171a) of the neighboring pair (171).

12. The heat exchanger (100) according to any of the preceding claims, wherein the tubes of the first type (150A) are interlaced with turbulators (170B), whereas tubes of the second type (150B) are interlaced with fins (170A).

13. The heat exchanger (100) according to any of claims 10-12, wherein at least one of the tubes of the second type (150B) is in contact with the turbulator (170B).

14. The heat exchanger (100) as claimed in any of the preceding claims, wherein the second manifold (104) is fluidly connected to expansion device (800).

15. The heat exchanger (100) according to any of claims 10-14, wherein the heat exchanger (100) comprises an insulating section (190), wherein said insulating section (190) comprises the secondary tube (171b) of the terminal pair (171) of the second section (170), said secondary tube (171a) neighboring directly with the third section (180), and the primary tube (181a) of the third section (180), wherein the second fluid (LP) circulates in both secondary tube (171a) and the primary tube (181a).
